# EUROPEAN PATENT SPECIFICATION

(11) **EP 2 930 527 B1**
(45) Date of publication and mention of the grant of the patent: **07.06.2023**
(21) Application number: 14163843.7
(22) Date of filing: 08.04.2014
(51) Int. Cl.: G01S 5/00, G06F 21/55, G06F 21/44, G06Q 10/08, G06Q 10/00, G06F 16/958, G06F 16/9537

(54) **Determining a location of a field device**
Bestimmung des Standorts einer Feldvorrichtung
Déterminer un emplacement d'un dispositif de terrain

(43) Date of publication of application: 14.10.2015
(73) Proprietor: ASSA ABLOY AB, 107 23 Stockholm (SE)
(72) Inventor: Strömberg, Stefan, 112 45 STOCKHOLM (SE); Gustafsson, Niklas, 141 39 HUDDINGE (SE)
(74) Representative: Kransell & Wennborg KB

(56) References cited:
- WO-A1-01/06401
- US-A1- 2010 127 927
- US-A1- 2011 161 005
- US-A1- 2012 177 025
- US-A1- 2013 028 248

## Description

### TECHNICAL FIELD

The invention relates to a method, location determination device, computer program and computer program product for determining a location of a field device.

### BACKGROUND

When field devices are installed in the field, it is beneficial to know the location of each one of these. Field devices can for example be locks, ATMs (Automatic Teller Machines), vending machines, parking meters, etc.

Knowing the location of the field devices helps when the field devices need to be maintained, repaired, etc.

In the prior art, the location of field devices are typically recorded manually e.g. on a map or in a document. Such manual recording requires a lot of effort and is prone to errors.

US 2010/127927 A discloses a system for identifying, locating and positioning an object inside a given and unequipped zone.

WO 01/06401 A1 discloses a mobile tag reader and method for tracking tags for an inventory control and/or security of distributed assets.

US 8,442, 716 presents a method for identifying physical location of entities, by aggregating a number of geo-tagged data points from public sources. The data points relate to information that is associated with a geographic location, such as photos, microblog entries, geo-tagged queries, text recovered from street-side images, locations reported by businesses or other entities on their own web sites, locations on a map marked by users or business owners, etc. This procedure requires a certain amount of available data points to function, which may work for public entities, such as business locations, etc. However, this solution will not work well for field devices for an organisation with limited public interest.

### SUMMARY

It is an object to provide a more convenient way of obtaining the location of field devices belonging to an organisation.

The invention is set out in the appended set of claims.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic diagram showing an environment in which embodiments presented herein can be applied;
Figs 2A-D are schematic diagrams illustrating embodiments for communication with a field device of Fig 1;
Fig 3 is a schematic diagram illustrating an embodiment where the field device of Fig 1 is embodied in a lock;
Fig 4 is a flow chart illustrating a method for determining a location of a field device, e.g. as shown in Fig 1;
Fig 5 is a schematic diagram of an embodiment of a location determination device, such as those of Fig 1 and Fig 3;
Fig 6 is a schematic diagram showing functional modules of the software instructions of the location determination device of Fig 5; and
Fig 7 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

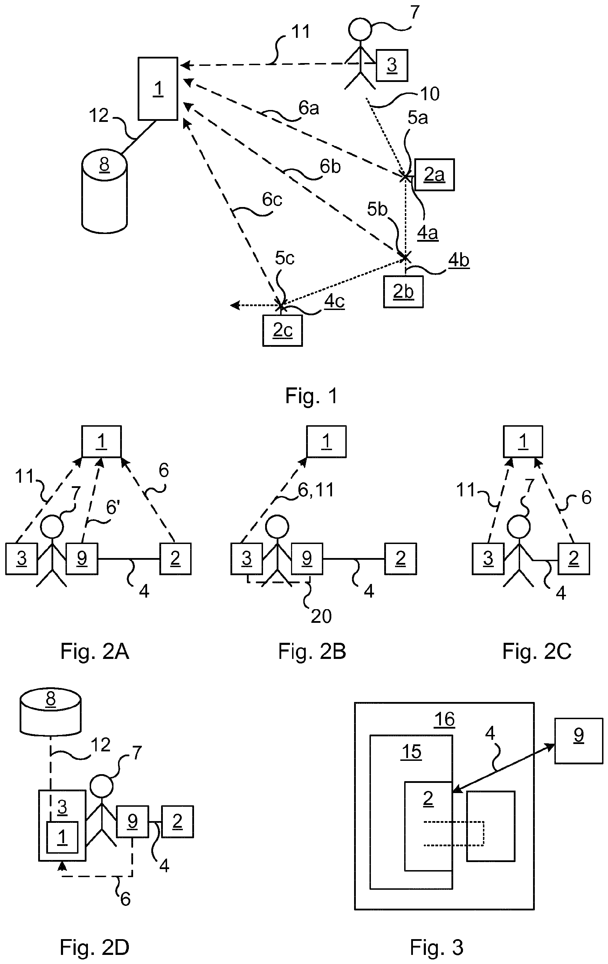

Fig 1 is a schematic diagram showing an environment in which embodiments presented herein can be applied for determining the location of field devices. The field devices may all be associated with one organisation. In one example, field devices includes locks provided in different locations for an organisation, such as a utility company, a telecom operator or similar. Alternatively, the field devices are ATMs (Automatic Teller Machines), vending machines, parking meters, etc. In Fig 1, three field devices 2a-c are shown; however, it is to be noted that the solutions presented herein are applicable to any number of field devices and the benefit of these solutions increases with the number of field devices to determine location for.

Thus, it is here shown a situation where the locations of three field devices 2a-c are to be determined. A user 7 is in the same location as a positioning device 3. The positioning device 3 is able to determine its location, e.g. using satellite based location determination such as GPS (Global Positioning System) or similar. Alternatively or additionally, the location of the positioning device 3 can be determined using an indoor positioning system, e.g. using beacons from beacon transmitters of known locations. The positioning device 3 can be portable such as forming part of a cellular phone (e.g. a smartphone), a tablet computer or a laptop computer. Alternatively, the positioning device 3 is a vehicle mounted device such as a navigation system or other in-car infotainment system. In any case, within some margin of error, the positioning device 3 is considered to be in the same location as the user 7.

The user 7 follows a path 10 to visit each one of the first field device 2a, the second field device 2b and the third field device 2c. The user 7 interacts with each one of the field devices 2a-c. More specifically, in a first location 5a, the user 7 performs a first interaction 4a with the first field device 2a. In a second location 5b, the user 7 performs a second interaction 4b with the second field device 2b. In a third location 5c, the user 7 performs a third interaction 4c with the third field device 2c.

A first indication 6a of the first interaction 5a is communicated to a location determination device 1. Similarly, a second indication 6b of the second interaction 5b and a third indication 6c of the third interaction 5c is communicated to a location determination device 1. The indications 6a-c can be communicated directly from the field devices 2a-c to the location determination device 1 or via an intermediary device, which is described in more detail with reference to Figs 2A-D below. Moreover, a signal 11 comprising the location of the positioning device 3 (which thus also indicates a location of the user 7) is communicated to the location determination device 1. The signal 11 comprising the location may be communicated more or less continuously, at the times of each interaction with the field devices 2a-c or in batch after the user 7 has completed the path 10 to all the field devices 2a-c. The signal 11 can for example be communicated using an Internet Protocol (IP) network such as a cellular network connected to the Internet.

By having access to both the indication of interaction and the signal(s) 11 comprising the location(s) these two separate sources can be used to deduce a location of each one of the field devices 2a-c, as described in more detail below. This allows the location determination device 1 to store the location 12 of each field device 2a-c in a database 8. The database 8 can be any suitable electronic storage, including a file system, a relational database, a hierarchical database, an object based database, etc.

Figs 2A-D are schematic diagrams illustrating embodiments for communication with a field device of Fig 1.

In the embodiment shown in Fig 2A, there is a user device 9 which interacts with the field device 2, e.g. over a wireless connection such as using NFC (Near Field Communication), RFID (Radio Frequency Identification) or Bluetooth, or over a physical connection, e.g. to communicate with a smart card of the user device 9 or a magnetic strip of the user device 9. In one embodiment, the user device 9 is an electronic key and the field device 2 is a lock. The interaction 4 between the user device 9 and the field device 2 can be communicated either as an indication 6 from the field device 2 or as an indication 6' from user device 9 to the location determination device 1. In one embodiment, the indication 6, 6' is part of an audit trail comprising attempted openings of locks in a group of locks, e.g. belonging to one organisation. When it is the user device 9 that transmits the audit trail, this can e.g. be done by temporarily storing the audit trail within the user device 9, and when the user device 9 communicates with an intermediary device (such as a lock with communication capabilities) in contact with the location determination device 1 the audit trail is transmitted from the user device via the intermediary device to the location determination device 1. It is to be noted that the audit trail could be retrieved by another user and user device than the one that caused the interaction 4. The user device 9 could also be a smart card or ATM card or similar.

The user 7 also has access to the positioning device 3 which transmits the signal 11 comprising its location to the location determination device 1. This can occur over a wireless interface, e.g. using a cellular communication network, WiFi, Bluetooth, etc. or over a wire based interface such as Ethernet, Universal Serial Bus (USB), FireWire, etc.

In the embodiment shown in Fig 2B, the user device 9 can communicate with the positioning device 3, e.g. via Bluetooth. In this way, the positioning device 3 communicates both the indication 6 of interaction and the signal 11 with the location information to the location determination device 1.

In the embodiment of Fig 2C, the user 7 interacts directly with the field device without the need of any user device. For example, if the field device 2 is a lock, the user 7 can interact with the field device 2 e.g. using a pin code or biometrics, such as fingerprint recognition or retina scanning. In this case, the field device 2 communicates the indication 6 of interaction to the location determination device 1. Again, it is the positioning device 3 which transmits the signal 11 comprising its location to the location determination device.

In the embodiment shown in Fig 2D, the location determining device 1 forms part of the positioning device 3. For example, the location determining device 1 can reuse the hardware of the positioning device 3 (thus forming a host device) and its logic can implemented using software in the positioning device 3. As in Fig 2B, the user device 9 here communicates with the positioning device 3 to indicate the transaction. The identity of the field device 2 forms part of the indication 6 from the user device 9, whereby the location can be determined in the positioning device 3. In this embodiment, the signal comprising the location information is an internal signal which may be implemented in software. In one embodiment, the user device 9 also forms part of the positioning device, e.g. if the field device is a lock that interacts over NFC (Near Field Communication) or Bluetooth with the positioning device in the form of a smart phone, thus also comprising the user device 9.

Fig 3 is a schematic diagram illustrating an embodiment where the field device 2 of Fig 1 and Figs 2A-D is embodied in a lock.

In this example, there is a door 15 which mechanically interacts with a field device 2 being a lock using a mechanical interface, such as a bolt. A user device 9 being a key can interact with the lock, after which the lock determines whether to grant access (by itself or in communication with other entities), and the lock is set in an unlocked state when access is granted. When the lock is in an unlocked state, the door 15 can be opened and when the lock is in a closed state, the door cannot be opened. In this way, access to a closed space 16 is controlled by the lock. It is to be noted that the lock can be located in a fixed structure by the door, such as the door frame (not shown) or in the door 15 (as shown).

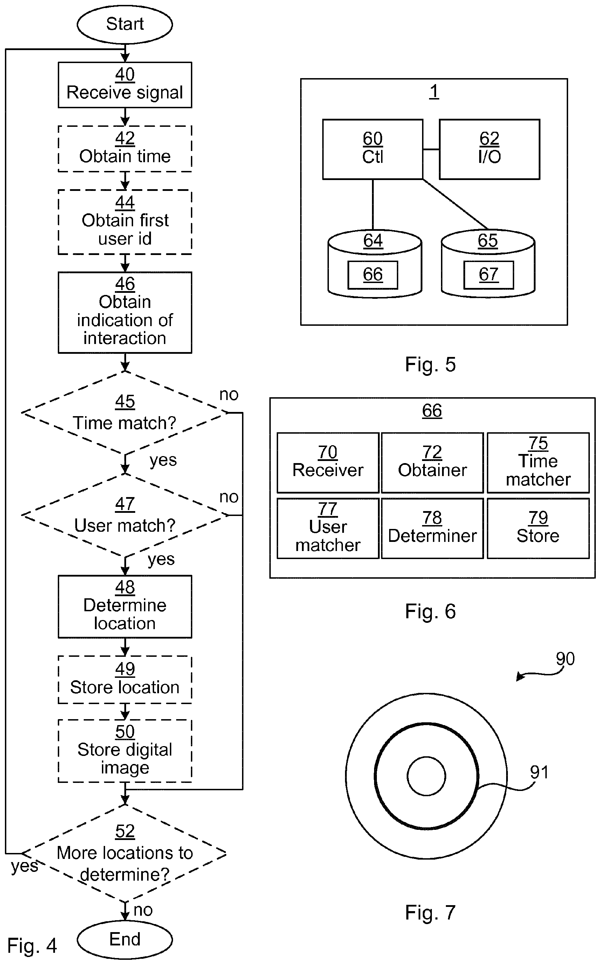

Fig 4 is a flow chart illustrating a method for determining a location of a field device, e.g. as shown in Fig 1. The method is performed in a location determination device which can be a stand-alone device as illustrated in Fig 1 and Figs 2A-C. Alternatively, the location determination device can be embodied within a positioning device as illustrated in Fig 2D.

In a *receive signal* step 40, a signal (see 11 of Fig 1 and Figs 2A-D) is received which comprises location coordinates of a user (e.g. by association with a positioning device of the user) having interacted with the field device. Optionally, this step comprises receiving a digital image with associated location coordinates. The location coordinates can then be embedded within the image file as a geo tag.

In one embodiment, this step comprises receiving a location message from a positioning device of the user, e.g. from an app running in the positioning device. The location message can be manually triggered by the user or sent regularly without user intervention.

When the location determination device is implemented in the positioning device, the signal comprising the location coordinates is an internal signal within the positioning device.

In an *obtain time* step 42, a first time, associated with the location coordinates of the *receive signal* step 40, is obtained. This can e.g. be a timestamp included in the signal or a time in conjunction when the signal is received.

In an *obtain first user id* step 44, a first user identifier of the user associated with the location coordinates is obtained. The first user identifier can also form part of the signal received in the receive signal step 40, e.g. as the sender of a message comprising a geo-tagged image.

In an *obtain indication of interaction* step 46, an indication (see 6, 6' of Fig 1 and Figs 2A-D) of interaction between the user and the field device is obtained. The indication of interaction includes an implicit or explicit indication of the field device of each interaction. The indication of interaction comprises an associated time, here denoted a second time. The indication of interaction comprises an associated user identifier, here denoted a second user identifier.

In one embodiment, this step comprises receiving a log of transactions of the field device. The log of transactions can e.g. be an audit trail comprising attempted openings of locks in a group of locks. Such an audit trail comprises time stamps and user identifiers of each attempted opening as well as the result (granted or denied) of the attempted opening.

In a conditional *time match* step 45, it is determined when the first time and the second time are considered to match. If this is true, the method proceeds to a conditional *user match* step 47. Otherwise, the method proceeds to a conditional *more locations to determine* step 52.

In the conditional *user match* step 47, it is determined when the first user identifier corresponds to the second user identifier. If this is true, the method proceeds to the *determine location* step 48. Otherwise, the method proceeds to a conditional *more locations to determine* step 52.

In the *determine location* step 48, the location of the field device is determined to correspond to the location coordinates of the *receive signal* step 40.

In an optional *store location* step 49, the location coordinates, with an association to the field device, are stored in a database (see 8 of Figs 1 and 2D).

In an optional *store digital image* step 50, when a digital image has been received in the *receive signal* step 40, the digital image is stored with an association to the field device in the database. In this way, service personnel can be provided with an image of the field device when maintenance is required, simplifying the identification of the field device.

In the conditional *more locations to determine* step 52, it is determined whether more locations are to be determined. If this is the case, the method returns to the receive signal step 40. Otherwise, the method ends.

The method described above will now be illustrated with a set of scenarios relating to locks. In these scenarios, the locks are field devices and the keys are user devices.

A large number of locks have been installed for an organisation, e.g. a utility company. The location of each lock needs to be known to easily locate a lock when maintenance and/or repairs are needed. To do this, the interactions of locks and users recorded in audit trails are used. The location of users when each interaction occurred is also recorded and can e.g. be sent in a signal to the location determining device 1 using an app running in the positioning device 3 in the form of a smartphone. Alternatively, the user can take a geo-tagged digital image of the lock and send a signal comprising the picture to the location determining device 1, e.g. in an e-mail. In such an embodiment, the user does not need to install any new software in the positioning device.

The location determining device 1 can then match the user and/or time of the signal with the audit trail, matching the location and field device to deduce its location. In one embodiment, the time is not tracked and instead the sequence is used for the matching. In one embodiment, the user is not needed for the matching e.g. if there are only a small number of users or if the location determining procedure is performed by one user at a time when all other users are inactive (e.g. after normal working hours).

In one embodiment, the positioning device continuously or regularly sends its location to a central location which can be obtained by the location determining device, matched with time. For example, this can be the case for navigation systems of a fleet management system and/or for a work order management system, where the location of operators are tracked during their work hours. When the operator is stationary, its time can be matched with an audit trail of the lock. This provides for a fully automated system for determining the location of the locks where no user involvement in the field is required.

The principles described above can be expanded to other field devices such as ATMs, parking meters, vending machines, etc.

Fig 5 is a schematic diagram of an embodiment of a location determination device 1, such as those of Fig 1 and Fig 3. A processor 60 is provided using any combination of one or more of a suitable central processing unit (CPU), multiprocessor, microcontroller, digital signal processor (DSP), application specific integrated circuit etc., capable of executing software instructions 66 stored in a memory 64, which can thus be a computer program product. The processor 60 can be configured to execute the method described with reference to Fig 4 above.

The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 66 can be any combination of read and write memory (RAM) and read only memory (ROM). The data memory 66 also comprises persistent storage, which, for example, can be any single one or combination of magnetic memory, optical memory, solid state memory or even remotely mounted memory. The data memory 66, stores data 67, such as location coordinates, indications of interaction etc.

The location determination device 1 further comprises an I/O (input/output) interface 62 for communicating with a storage device (8 of Fig 1) and optionally with field devices (2a-c of Fig 1).

It is to be noted that when the location determining device 1 is comprised in a host device, such as the positioning device 3, some or all of the components of Fig 5 can be shared with the host device.

Other components of the location determination device 1 are omitted in order not to obscure the concepts presented herein.

Fig 6 is a schematic diagram showing functional modules of the software instructions 66 of the location determination device 1 of Fig 5. The modules are implemented using software instructions executing in the location determination device 1. The modules correspond to the steps in the method illustrated in Fig 4.

A receiver 70 is arranged to receive a signal comprising location coordinates of a user having interacted with the field device. This module corresponds to the *receive signal* step 40 of Fig 4.

An obtainer 72 is arranged to obtain an indication of interaction between the user and the field device. Also, the obtainer is arranged to obtain a first time and a first user id associated with the signal of the receiver 70. This module corresponds to the *obtain time* step 42, the *obtain first user id* step 44 and the *obtain indication of interaction* step 46 of Fig 4.

A time matcher 75 is arranged to match a time associated with location coordinates with a time of an indication of interaction. This module corresponds to the conditional *time match* step 45 of Fig 4.

A user matcher 77 is arranged to match a user identifier associated with location coordinates with a user identifier of an indication of interaction. This module corresponds to the conditional *user match* step 47 of Fig 4.

A determiner 78 is arranged to determine the location of the field device. This module corresponds to the *determine location* step 48 of Fig 4.

A store 79 is arranged to store the location of the field device. This module corresponds to the *store location* step 49 and the *store digital image* step 50 of Fig 4.

Fig 7 is a schematic diagram showing one example of a computer program product 90 comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a removable solid state memory (such as a universal serial bus memory) or in a memory of a device, such as the memory 64 of Fig 5. While the computer program 91 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for determining a location of a field device (2, 2a-c), the method being performed in a location determination device (1) and comprising the steps of:
receiving (40) a signal comprising location coordinates (5a-c) of a user (7) having interacted with the field device (2, 2a-c), comprising receiving a location message from a positioning device (3) of the user (7), wherein the positioning device (3) is considered to be in the same location as the user (7);
obtaining (42) a first time, associated with the location coordinates;
obtaining (44) a first user identifier of the user (7) associated with the location coordinates;
obtaining (46) an indication of interaction (4a-c) between the user (7) and the field device (2, 2a-c), the indication of interaction comprises a second user identifier, wherein the indication of interaction comprises a second time; and
determining (48) the location of the field device (2, 2a-c) to correspond to the location coordinates only when the first user identifier corresponds to the second user identifier and the first time and the second time are considered to match.

2. The method according to claim 1, further comprising the step of:
storing (49) the location coordinates, with an association to the field device (2, 2a-c), in a database (8).

3. The method according to any one of the preceding claims, wherein the step of receiving (40) a signal comprises receiving a digital image with associated location coordinates.

4. The method according to claim 3, further comprising the step of:
storing (50) the digital image with an association to the field device (2, 2a-c) in the database (8).

5. The method according to any one of the preceding claims, wherein the step of obtaining (46) an indication of interaction comprises receiving a log of transactions of the field device (2, 2a-c).

6. The method according to claim 5, wherein the log of transactions is an audit trail.

7. The method according to any one of the preceding claims, wherein the field device (2, 2a-c) is a lock.

8. A location determination device (1) for determining a location of a field device (2, 2a-c), the location determination device (1) comprising:
a processor (60); and
a memory (64) storing instructions (66) that, when executed by the processor, causes the location determination device (1) to:
receive a signal comprising location coordinates (5a-c) of a user (7) having interacted with the field device (2, 2a-c), comprising to receive a location message from a positioning device (3) of the user (7), wherein the positioning device (3) is considered to be in the same location as the user (7);
obtain a first time, associated with the location coordinates;
obtain a first user identifier of the user (7) associated with the location coordinates;
obtain an indication of interaction (4a-c) between the user (7) and the field device (2, 2a-c), the indication of interaction comprises a second user identifier, wherein the indication of interaction comprises a second time; and
determine the location of the field device (2, 2a-c) to correspond to the location coordinates only when the first user identifier corresponds to the second user identifier and the first time and the second time are considered to match.

9. A computer program (66, 91) for determining a location of a field device (2, 2a-c), the computer program comprising computer program code which, when run on a location determination device (1) of a cellular communication network causes the location determination device (1) to:
receive a signal comprising location coordinates (5a-c) of a user (7) having interacted with the field device (2, 2a-c), comprising to receive a location message from a positioning device (3) of the user (7), wherein the positioning device (3) is considered to be in the same location as the user (7);
obtain a first time, associated with the location coordinates;
obtain a first user identifier of the user (7) associated with the location coordinates;
obtain an indication of interaction (4a-c) between the user (7) and the field device (2, 2a-c), the indication of interaction comprises a second user identifier, wherein the indication of interaction comprises a second time; and
determine the location of the field device (2, 2a-c) to correspond to the location coordinates only when the first user identifier corresponds to the second user identifier and the first time and the second time are considered to match.

10. A computer program product (64, 90) comprising a computer program according to claim 9 and a computer readable means on which the computer program is stored.

## Patentansprüche

1. Verfahren zur Bestimmung eines Standorts eines Feldgeräts (2, 2a-c), wobei das Verfahren in einem Standortbestimmungsgerät (1) durchgeführt wird und die Schritte umfasst:
Empfangen (40) eines Signals, das Ortskoordinaten (5a-c) eines Benutzers (7) umfasst, der mit dem Feldgerät (2, 2a-c) interagiert hat, umfassend Empfangen einer Standortnachricht von einer Positionierungsvorrichtung (3) des Benutzers (7), wobei die Positionierungsvorrichtung (3) als am selben Ort wie der Benutzer (7) befindlich betrachtet wird;
Erhalten (42) eines ersten Zeitpunks, der den Ortskoordinaten zugeordnet ist;
Erhalten (44) einer ersten Benutzerkennung des Benutzers (7), der den Ortskoordinaten zugeordnet ist;
Erhalten (46) einer Anzeige einer Interaktion (4a-c) zwischen dem Benutzer (7) und dem Feldgerät (2, 2a-c), wobei die Interaktionsanzeige eine zweite Benutzerkennung umfasst, wobei die Interaktionsanzeige einen zweiten Zeitpunkt umfasst; und
Bestimmen (48), dass der Standort des Feldgeräts (2, 2a-c) nur dann den Ortskoordinaten entspricht, wenn die erste Benutzerkennung der zweiten Benutzerkennung entspricht und der erste Zeitpunkt und der zweite Zeitpunkt als übereinstimmend angesehen werden.

2. Verfahren nach Anspruch 1, ferner umfassend den Schritt: Speichern (49) der Ortskoordinaten mit einer Zuordnung zu dem Feldgerät (2, 2a-c) in einer Datenbank (8) .

3. Verfahren nach einem der vorhergehenden Ansprüche, wobei der Schritt des Empfangens (40) eines Signals Empfangen eines digitalen Bildes mit zugeordneten Ortskoordinaten umfasst.

4. Verfahren nach Anspruch 3, ferner umfassend den Schritt: Speichern (50) des digitalen Bildes mit einer Zuordnung zu dem Feldgerät (2, 2a-c) in der Datenbank (8) .

5. Verfahren nach einem der vorhergehenden Ansprüche, wobei der Schritt des Erhaltens (46) einer Interaktionsanzeige Empfangen eines Transaktionsprotokolls des Feldgeräts (2, 2a-c) umfasst.

6. Verfahren nach Anspruch 5, wobei das Transaktionsprotokoll ein Audit-Trail ist.

7. Verfahren nach einem der vorhergehenden Ansprüche, wobei das Feldgerät (2, 2a-c) ein Schloss ist.

8. Standortbestimmungsvorrichtung (1) zur Bestimmung eines Standorts eines Feldgeräts (2, 2a-c), wobei die Standortbestimmungsvorrichtung (1) umfasst:
einen Prozessor (60); und
einen Speicher (64), der Anweisungen (66) speichert, die, wenn sie von dem Prozessor ausgeführt werden, die Standortbestimmungsvorrichtung (1) veranlassen zum:
Empfangen eines Signals, das Ortskoordinaten (5a-c) eines Benutzers (7) umfasst, der mit dem Feldgerät (2, 2a-c) interagiert hat, umfassend Empfangen einer Standortnachricht von einer Positionsbestimmungsvorrichtung (3) des Benutzers (7), wobei die Positionierungsvorrichtung (3) als am selben Ort wie der Benutzer (7) befindlich betrachtet wird;
Erhalten eines ersten Zeitpunkts, der den Ortskoordinaten zugeordnet ist;
Erhalten einer ersten Benutzerkennung des Benutzers (7), der den Ortskoordinaten zugeordnet ist;
Erhalten einer Anzeige einer Interaktion (4a-c) zwischen dem Benutzer (7) und dem Feldgerät (2, 2a-c), wobei die Interaktionsanzeige eine zweite Benutzerkennung umfasst, wobei die Interaktionsanzeige einen zweiten Zeitpunkt umfasst; und
Bestimmen, dass der Standort des Feldgeräts (2, 2a-c) nur dann den Ortskoordinaten entspricht, wenn die erste Benutzerkennung der zweiten Benutzerkennung entspricht und der erste Zeitpunkt und der zweite Zeitpunkt als übereinstimmend angesehen werden.

9. Computerprogramm (66, 91) zur Bestimmung eines Standorts eines Feldgeräts (2, 2a-c), wobei das Computerprogramm einen Computerprogrammcode umfasst, der, wenn er auf einer Standortbestimmungsvorrichtung (1) eines zellularen Kommunikationsnetzwerks ausgeführt wird, die Standortbestimmungsvorrichtung (1) veranlasst zum:
Empfangen eines Signals, das Ortskoordinaten (5a-c) eines Benutzers (7) umfasst, der mit dem Feldgerät (2, 2a-c) interagiert hat, umfassend Empfangen einer Standortnachricht von einer Positionierungsvorrichtung (3) des Benutzers (7), wobei die Positionierungsvorrichtung (3) als am selben Ort wie der Benutzer (7) befindlich betrachtet wird;
Erhalten eines ersten Zeitpunks, der den Ortskoordinaten zugeordnet ist;
Erhalten einer ersten Benutzerkennung des Benutzers (7), der den Ortskoordinaten zugeordnet ist;
Erhalten einer Anzeige einer Interaktion (4a-c) zwischen dem Benutzer (7) und dem Feldgerät (2, 2a-c), wobei die Interaktionsanzeige eine zweite Benutzerkennung umfasst, wobei die Interaktionsanzeige einen zweiten Zeitpunkt umfasst; und
Bestimmen, dass der Standort des Feldgeräts (2, 2a-c) nur dann den Ortskoordinaten entspricht, wenn die erste Benutzerkennung der zweiten Benutzerkennung entspricht und der erste Zeitpunkt und der zweite Zeitpunkt als übereinstimmend angesehen werden.

10. Computerprogrammprodukt (64, 90), umfassend ein Computerprogramm nach Anspruch 9 und ein computerlesbares Mittel, auf dem das Computerprogramm gespeichert ist.

## Revendications

1. Procédé de détermination d'un emplacement d'un dispositif de terrain (2, 2a-c), le procédé étant réalisé dans un dispositif de détermination d'emplacement (1) et comprenant les étapes de:
réception (40) d'un signal comprenant des coordonnées d'emplacement (5a-c) d'un utilisateur (7) ayant interagi avec le dispositif de terrain (2, 2a-c), comprenant la réception d'un message d'emplacement à partir d'un dispositif de positionnement (3) de l'utilisateur (7), dans lequel le dispositif de positionnement (3) est considéré comme se trouvant au même emplacement que l'utilisateur (7) ;
obtention (42) d'un premier temps, associé aux coordonnées d'emplacement ;
obtention (44) d'un premier identifiant d'utilisateur de l'utilisateur (7) associé aux coordonnées d'emplacement ;
obtention (46) d'une indication d'interaction (4a-c) entre l'utilisateur (7) et le dispositif de terrain (2, 2a-c), l'indication d'interaction comprenant un second identifiant d'utilisateur, dans lequel l'indication d'interaction comprend un second temps ; et
détermination (48) que l'emplacement du dispositif de terrain (2, 2a-c) correspond aux coordonnées d'emplacement uniquement lorsque le premier identificateur d'utilisateur correspond au second identificateur d'utilisateur et que le premier et le second temps sont jugés correspondre.

2. Procédé selon la revendication 1, comprenant en outre l'étape de :
stockage (49) des coordonnées d'emplacement, avec une association au dispositif de terrain (2, 2a-c), dans une base de données (8).

3. Procédé selon l'une quelconque des revendications précédentes, dans lequel l'étape de réception (40) d'un signal comprend la réception d'une image numérique avec des coordonnées d'emplacement associées.

4. Procédé selon la revendication 3, comprenant en outre l'étape de :
stockage (50) de l'image numérique avec une association au dispositif de terrain (2, 2a-c) dans la base de données (8).

5. Procédé selon l'une quelconque des revendications précédentes, dans lequel l'étape d'obtention (46) d'une indication d'interaction comprend la réception d'un journal des transactions du dispositif de terrain (2, 2a-c) .

6. Procédé selon la revendication 5, dans lequel le journal de transactions est une piste d'audit.

7. Procédé selon l'une quelconque des revendications précédentes, dans lequel le dispositif de terrain (2, 2a-c) est un verrou.

8. Dispositif de détermination d'emplacement (1) pour déterminer un emplacement d'un dispositif de terrain (2, 2a-c), le dispositif de détermination d'emplacement (1) comprenant :
un processeur (60) ; et
une mémoire (64) stockant des instructions (66) qui, à leur exécution par le processeur, amènent le dispositif de détermination d'emplacement (1) à :
recevoir un signal comprenant des coordonnées d'emplacement (5a-c) d'un utilisateur (7) ayant interagi avec le dispositif de terrain (2, 2a-c), y compris recevoir un message d'emplacement à partir d'un dispositif de positionnement (3) de l'utilisateur (7), dans lequel le dispositif de positionnement (3) est considéré comme se trouvant au même emplacement que l'utilisateur (7) ;
obtenir un premier temps, associé aux coordonnées d'emplacement ;
obtenir un premier identifiant d'utilisateur de l'utilisateur (7) associé aux coordonnées d'emplacement ;
obtenir une indication d'interaction (4a-c) entre l'utilisateur (7) et le dispositif de terrain (2, 2a-c), l'indication d'interaction comprenant un second identifiant d'utilisateur, dans lequel l'indication d'interaction comprend un second temps ; et
déterminer que l'emplacement du dispositif de terrain (2, 2a-c) correspond aux coordonnées d'emplacement uniquement lorsque le premier identificateur d'utilisateur correspond au second identificateur d'utilisateur et que le premier et le second temps sont jugés correspondre.

9. Programme d'ordinateur (66, 91) pour déterminer un emplacement d'un dispositif de terrain (2, 2a-c), le programme d'ordinateur comprenant un code de programme d'ordinateur qui, à son exécution sur un dispositif de détermination d'emplacement (1) d'un réseau de communication cellulaire, amène le dispositif de détermination d'emplacement (1) à :
recevoir un signal comprenant des coordonnées d'emplacement (5a-c) d'un utilisateur (7) ayant interagi avec le dispositif de terrain (2, 2a-c), y compris recevoir un message d'emplacement à partir d'un dispositif de positionnement (3) de l'utilisateur (7), dans lequel le dispositif de positionnement (3) est considéré comme se trouvant au même emplacement que l'utilisateur (7) ;
obtenir un premier temps, associé aux coordonnées d'emplacement ;
obtenir un premier identifiant d'utilisateur de l'utilisateur (7) associé aux coordonnées d'emplacement ;
obtenir une indication d'interaction (4a-c) entre l'utilisateur (7) et le dispositif de terrain (2, 2a-c), l'indication d'interaction comprenant un second identifiant d'utilisateur, dans lequel l'indication d'interaction comprend un second temps ; et
déterminer que l'emplacement du dispositif de terrain (2, 2a-c) correspond aux coordonnées d'emplacement uniquement lorsque le premier identificateur d'utilisateur correspond au second identificateur d'utilisateur et que le premier et le second temps sont jugés correspondre..

10. Produit de programme d'ordinateur (64, 90) comprenant un programme d'ordinateur selon la revendication 9 et un moyen lisible par ordinateur sur lequel le programme d'ordinateur est stocké.
